# EUROPEAN PATENT SPECIFICATION

(11) **EP 2 026 902 B1**
(45) Date of publication and mention of the grant of the patent: **07.09.2016**
(21) Application number: 07748495.4
(22) Date of filing: 16.05.2007
(51) Int. Cl.: B01J 13/14, D21H 21/54, C08J 9/20, C09D 11/02, C09D 11/106

(54) **MICROSPHERES**
MIKROKÜGELCHEN
MICROSPHÈRES

(30) Priority: 08.06.2006 EP 06115166
(43) Date of publication of application: 25.02.2009
(73) Proprietor: Akzo Nobel N.V., 6800 SB Arnhem (NL)
(72) Inventor: NORDIN, Ove, S-854 66 Sundsvall (SE); NYHOLM, Christina, S-853 57 Sundsvall (SE)
(74) Representative: Akzo Nobel IP Department
(86) International application number: PCT/SE2007/050334
(87) International publication number: WO 2007/142593

(56) References cited:
- EP-A- 1 288 272
- WO-A-2004/113613
- US-A1- 2005 079 352
- US-B1- 6 235 800

## Description

The present invention relates to thermally expandable thermoplastic microspheres, production and use thereof, and an aqueous slurry comprising such microspheres, as well as expanded microspheres.

Expandable thermoplastic microspheres comprising a thermoplastic polymer shell encapsulating a propellant are commercially available under the trademark EXPANCEL^{®} and are used as a foaming agent in many different applications.

In such microspheres, the propellant is normally a liquid having a boiling temperature not higher than the softening temperature of the thermoplastic polymer shell. Upon heating, the propellant evaporates to increase the internal pressure at the same time as the shell softens, resulting in significant expansion of the microspheres. The temperature at which the expansion starts is called Tₛₜₐᵣₜ, while the temperature at which maximum expansion is reached is called Tₘₐₓ. Expandable microspheres are marketed in various forms, e.g. as dry free flowing particles, as an aqueous slurry or as a partially dewatered wet-cake.

Expandable microspheres can be produced by polymerising ethylenically unsaturated monomers in the presence of a propellant. Detailed descriptions of various expandable microspheres and their production can be found in, for example, US Patents 3615972, 3945956, 4287308, 5536756, 6235800, 6235394 and 6509384, in US Patent Applications Publications US 2004/0176486 and 2005/0079352, in GB 1024195, in EP 486080 and EP 1288272, in WO 2004/072160, and in JP Laid Open No. 1987-286534, 2005-213379 and 2005-272633.

One important application for expandable microspheres is paper making as described in e.g. US Patents 3556934 and 4133688, JP Patent 2689787, JP Laid Open No. 2003-105693, WO 2004/113613, WO 2006/068573, WO 2006/068574 and in Ö. Soderberg, "World Pulp & Paper Technology 1995/96, The International Review for the Pulp & Paper Industry" p. 143-145.

Other important applications for expandable microspheres are printing inks, vinyl foams (e.g. plastisols), non-woven and artificial leather.

In some applications it is desirable that the microspheres have a comparatively low Tₛₜₐᵣₜ. However, the polymer shell in commercially available microspheres with a low Tₛₜₐᵣₜ are usually made of a monomer mixture comprising halogen containing monomers like vinylidene chloride. Such microspheres usually suffer from high amounts of residual monomers and poor resistance to chemicals, like solvents and plasticisers used in artificial leathers and plastisols. Attempts to make microspheres with low Tₛₜₐᵣₜ and high expansion capability without halogen containing monomers have not yet solved these problems satisfactorily

It is an object of the invention to provide expandable microspheres with high expansion capability and low Sₛₜₐᵣₜ, preferably having high resistance to chemicals and without including high amounts of halogen containing monomers.

It is still another object of the invention to provide expandable microspheres useful in paper making or in printing inks, for example as a foaming agent therein.

It is a further object of the invention to provide a process for the production of paper.

It is still a further object of the invention to provide an aqueous slurry comprising expandable microspheres useful in the production of paper.

It has surprisingly been found possible to fulfil these objects by providing microspheres with a polymer shell made from certain combinations of monomers.

One aspect of the invention concerns thermally expandable thermoplastic microspheres comprising a polymer shell made from ethylenically unsaturated monomers encapsulating a propellant, said ethylenically unsaturated monomers comprising from 20 to 80 wt% of acrylonitrile and from 1 to 70 wt% of vinyl ether having only one carbon-to-carbon double bond, the total amount of acrylonitrile and vinyl ether having only one carbon-to-carbon double bond being from 30 to 100 wt%, preferably from 50 to 100 wt% or from 65 to 100 wt% of the ethylenically unsaturated monomers.

The ethylenically unsaturated monomers preferably comprise from 1 to 60 wt%, most preferably from 1 to 50 wt% or 5 to 50 wt% of vinyl ether having only one carbon-to-carbon double bond. Unless extremely low Tₛₜₐᵣₜ is desired, an amount from 5 to 30 wt% is particularly preferred. The vinyl ether may be a single one or a mixture of different vinyl ethers. Examples of vinyl ethers having only one carbon-to-carbon double bond include alkyl vinyl ethers, the alkyl group preferably having from 1 to 10 carbon atoms, most preferably from 1 to 5 carbon atoms. Specific examples include methyl vinyl ether, ethyl vinyl ether, propyl vinyl ether, isopropyl vinyl ether, butyl vinyl ether, isobutyl vinyl ether, tert-butyl vinyl ether, *sec*-butyl vinyl ether and mixtures thereof, of which methyl vinyl ether and ethyl vinyl ether are particularly preferred. One or more hydrogen atoms on the alkyl group may be substituted with a functional group such as hydroxyl, carboxylic acid, amine, ether etc. One specific example is ethylene glycol vinyl ether.

The ethylenically unsaturated monomers preferably comprise from 40 to 80 wt%, most preferably from 50 to 70 of acrylonitrile.

The ethylenically unsaturated monomers further preferably comprise methacrylonitrile, preferably in an amount from 1 to 50 wt%, most preferably from 5 to 40.

The ethylenically unsaturated monomers may further comprise one or more esters of acrylic acid, esters of methacrylic acid and mixtures thereof. The amount of such monomers may, for example, be from 1 to 50, preferably from 5 to 40.

If included, esters of methacrylic acid may, for example, be one or more of methyl methacrylate, isobornyl methacrylate, ethyl methacrylate, butyl methacrylate or hydroxyethylmethacrylate, of which methyl methacrylate is particularly preferred.

If included, esters of acrylic acid may, for example, be one or more of methyl acrylate, ethyl acrylate, propyl acrylate, butyl acrylate, 2-ethylhexyl acrylate or hydroxyethylacrylate, of which methyl acrylate is particularly preferred.

It is preferred that the ethylenically unsaturated monomers are substantially free from vinylidene chloride. If included, the amount thereof is preferably less than 10 wt%, most preferably less than 5 wt%, or even less than 1 wt% of the ethylenically unsaturated monomers. It is also preferred that the ethylenically unsaturated monomers are substantially free from any halogen containing monomers. If included, the amount thereof is preferably less than 10 wt%, most preferably less than 5 wt%, or even less than 1 wt% of the ethylenically unsaturated monomers.

Preferably the ethylenically unsaturated monomers comprise small amounts of one or more crosslinking multifunctional monomers, such as one or more of divinyl benzene, ethylene glycol di(meth)acrylate, di(ethylene glycol) di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, dipentaerythritol hexa(meth)acrylate, triallylformal tri(meth)acrylate, allyl methacrylate, trimethylol propane tri(meth)acrylate, tributanediol di(meth)acrylate, PEG #200 di(meth)acrylate, PEG #400 di(meth)acrylate, PEG #600 di(meth)acrylate, 3-acryloyloxyglycol monoacrylate, triacryl formal, triallyl isocyanate, triallyl isocyanurate, divinyl ether, ethylene glycol divinyl ether, diethylene glycol divinyl ether, triethylene glycol divinyl ether, tetraethylene glycol divinyl ether etc. Particularly preferred are crosslinking monomers that are at least tri-functional, examples of which include pentaerythritol tri(meth)acrylate, pentaerythritol tetra(meth)acrylate, dipentaerythritol hexa(meth)acrylate, triallylformal tri(meth)acrylate, trimethylol propane tri(meth)acrylate, triacryl formal, triallyl isocyanate and triallyl isocyanurate. The amounts of crosslinking functional monomers may, for example, be from 0.1 to 10 wt% or from 0.1 to 1 wt% or from 1 to 3 wt% of the ethylenically unsaturated monomers, 0.1 to 1 wt% being particularly preferred in case the one or more multifunctional monomers are at least tri-functional and 1 to 3 wt% being particularly preferred in case the one or more multifunctional monomers are di-functional.

If ethylenically unsaturated monomers other than acrylonitrile, vinyl ether, methacrylonitrile, esters of acrylic acid, esters of methacrylic acid and one or more crosslinking multifunctional monomers, are included, the amount thereof is preferably from 0 to 10 wt%, most preferably from 0 to 5 wt%. Examples of such other kinds of monomers that may be included are nitrile containing monomers such as α-ethoxyacrylonitrile, fumaronitrile or crotonitrile; vinyl pyridine; vinyl esters such as vinyl acetate; styrenes such as styrene, halogenated styrenes or α-methyl styrene; dienes such as butadiene, isoprene and chloroprene; unsaturated carboxylic compounds like acrylic acid, methacrylic acid and salts thereof; or other unsaturated monomers like acrylamide, methacrylamide or N-substituted maleimides.

In an embodiment of the invention the ethylenically unsaturated monomers substantially consist of acrylonitrile, alkyl vinyl ether, methacrylonitrile, one or more esters of acrylic acid or methacrylic acid, and one or more crosslinking multifunctional monomers. In another embodiment the ethylenically unsaturated monomers substantially consist of acrylonitrile, alkyl vinyl ether, methacrylonitrile, and one or more crosslinking multifunctional monomers. In still another embodiment the ethylenically unsaturated monomers substantially consist of acrylonitrile, alkyl vinyl ether, one or more esters of acrylic acid or methacrylic acid, and one or more crosslinking multifunctional monomers. In a further embodiment the ethylenically unsaturated monomers substantially consist of acrylonitrile, alkyl vinyl ether, and one or more crosslinking multifunctional monomers.

The softening temperature of the polymer shell, normally corresponding to its glass transition temperature (Tg), is preferably within the range from 0 to 140°C, most preferably from 30 to 100°C.

The propellant is normally a liquid having a boiling temperature not higher than the softening temperature of the thermoplastic polymer shell and may comprise one or more hydrocarbons such as methane, ethane, propane, n-butane, isobutane, n-pentane, isopentane, neo-pentane, cyclopentane, hexane, isohexane, neo-hexane, cyclohexane, heptane, isoheptane, octane and isooctane, isododecane. Aside from them, other hydrocarbon types can also be used, such as petroleum ether, or chlorinated or fluorinated hydrocarbons, such as methyl chloride, methylene chloride, dichloroethane, dichloroethylene, trichloroethane, trichloroethylene, trichlorofluoromethane, perfluorinated hydrocarbons, fluorine containing ethers, etc. Preferred propellants comprise at least one of propane, n-butane, isobutane or isopentane, alone or in mixture, or in a mixture with one or more other hydrocarbons. The amount of n-butane and/or isobutane and/or isopentane in the propellant is preferably from 50 to 100 wt%, most preferably from 75 to 100 wt%. If propane is present, the amount thereof in the propellant is preferably from 10 to 50 wt%. The boiling point of the propellant at atmospheric pressure is preferably within the range from -50 to 100°C, most preferably from -40 or -30 to 50°C, or from -30 or -20 to 30°C.

Tₛₜₐᵣₜ for the expandable microspheres is preferably from 40 to 140°C, most preferably from 50 to 100°C. Tₘₐₓ for the expandable microspheres is preferably from 80 to 200°C, most preferably from 100 to 170°C.

Apart from the polymer shell and the propellant the microspheres may comprise further substances added during the production thereof, normally in an amount from 0 to 20 wt%, preferably from 1 to 10 wt%. Examples of such substances are solid suspending agents, such as one or more of starch, crosslinked polymers, gum agar, derivated cellulose like for example methyl cellulose, hydroxypropyl methylcellulose, hydroxyethylcellolose and carboxy methylcellulose, silica, colloidal clays like for example chalk and bentonite, and/or one or more salts, oxides or hydroxides of metals like Al, Ca, Mg, Ba, Fe, Zn, Ni and Mn, for example one or more of calcium phosphate, calcium carbonate, magnesium hydroxide, barium sulphate, calcium oxalate, and hydroxides of aluminium, iron, zinc, nickel or manganese. If present, these solid suspending agents are normally mainly located to the outer surface of the polymer shell. However, even if a suspending agent has been added during the production of the microspheres, this may have been washed off at a later stage and could thus be substantially absent from the final product.

The expandable microspheres preferably have a volume median diameter from 1 to 500 µm, more preferably from 5 to 100 µm, most preferably from 10 to 50 µm. The amount of propellant in the expandable microspheres is preferably from 5 to 50 wt%, more preferably from 10 to 50 wt%, most preferably from 15 to 40 wt%, particularly most preferably from 20 to 35 wt%.

The term expandable microspheres as used herein refers to expandable microspheres that have not previously been expanded, i.e. unexpanded expandable microspheres.

A further aspect of the invention concerns a process for the production of expandable thermoplastic microspheres as described above. The process comprises polymerising ethylenically unsaturated monomers as described above in a preferably aqueous suspension in the presence of a propellant to yield microspheres comprising a polymer shell encapsulating said propellant. Regarding the kinds and amounts of monomers and propellant, the above description of the expandable microspheres is referred to. The production may follow the same principles as described in the earlier mentioned US Patents 3615972, 3945956, 4287308, 5536756, 6235800, 6235394 and 6509384, US Patent Applications Publications US 2004/0176486 and 2005/0079352, GB 1024195, EP 486080, EP 1288272, WO 2004/072160 and JP Laid Open No. 1987-286534, 2005-213379 and 2005-272633.

In an embodiment of the invention the microspheres are produced in a batchwise process and the polymerisation may then be conducted as described below in a reaction vessel. For 100 parts of monomer phase (suitably including monomers and propellant, the proportions of which determine proportions of monomers in the polymer shell and the amount of propellant in the final product), one or more polymerisation initiator, preferably in an amount from 0.1 to 5 parts, aqueous phase, preferably in an amount from 100 to 800 parts, and one or more preferably solid colloidal suspending agent, preferably in an amount from 1 to 20 parts, are mixed and homogenised. The size of the droplets of the monomer phase obtained determines the size of the final expandable microspheres in accordance with the principles described in e.g. US Patent 3615972, that can be applied for all similar production methods with various suspending agents. The temperature is suitably maintained from 40 to 90°C, preferably from 50 to 80°C, while the suitable pH depends on the suspending agent used. For example, a high pH, preferably from 5 to 12, most preferably from 6 to 10, is suitable if the suspending agent is selected from salts, oxides or hydroxides of metals like Ca, Mg, Ba, Zn, Ni and Mn, for example one or more of calcium phosphate, calcium carbonate, magnesium hydroxide, magnesium oxide, barium sulphate, calcium oxalate, and hydroxides of zinc, nickel or manganese. A low pH, preferably from 1 to 6, most preferably from 3 to 5, is suitable if the suspending agent is selected from starch, methyl cellulose, hydroxypropyl methylcellulose, hydroxypropyl methylcellulose, carboxy methylcellulose, gum agar, silica, colloidal clays, or oxide or hydroxide of aluminium or iron. Each one of the above agents has different optimal pH, depending on, for example, solubility data.

In order to enhance the effect of the suspending agent, it is also possible to add small amounts of one or more promoters, for example from 0.001 to 1 wt%. Usually, such promoters are organic materials and may, for example, be selected from one or more of water-soluble sulfonated polystyrenes, alginates, carboxymethylcellulose, tetramethyl ammonium hydroxide or chloride or water-soluble complex resinous amine condensation products such as the water-soluble condensation products of diethanolamine and adipic acid, the water-soluble condensation products of ethylene oxide, urea and formaldehyde, polyethylenimine, polyvinylalcohol, polyvinylpyrrolidone, polyvinylamine, amphoteric materials such as proteinaceous, materials like gelatin, glue, casein, albumin, glutin and the like, non-ionic materials like methoxycellulose, ionic materials normally classed as emulsifiers, such as soaps, alkyl sulfates and sulfonates and long chain quaternary ammonium compounds.

Conventional radical polymerisation may be used and initiators are suitably selected from one or more of organic peroxides such as dialkyl peroxides, diacyl peroxides, peroxy esters, peroxy dicarbonates, or azo compounds. Suitable initiators include dicetyl peroxydicarbonate, di(4-tert-butylcyclohexyl) peroxydicarbonate, dioctanoyl peroxide, dibenzoyl peroxide, dilauroyl peroxide, didecanoyl peroxide, tert-butyl peracetate, tert-butyl perlaurate, tert-butyl perbenzoate, tert-butyl hydroperoxide, cumene hydroperoxide, cumene ethylperoxide, diisopropylhydroxy dicarboxylate, 2,2'-azobis(2,4-dimethyl valeronitrile), 2,2'-azobis(isobutyronitrile), 1,1'-azobis(cyclohexane-1-carbonitrile), dimethyl 2,2'-azobis(2-methylpropionate), 2,2'-azobis[2-methyl-N-(2-hydroxyethyl)propionamide] and the like. It is also possible to initiate the polymerisation with radiation, such as high energy ionising radiation.

When the polymerisation is essentially complete, microspheres are normally obtained as an aqueous slurry or dispersion, which can be used as such or dewatered by any conventional means, such as bed filtering, filter pressing, leaf filtering, rotary filtering, belt filtering or centrifuging to obtain a so called wet cake. However, it is also possible to dry the microspheres by any conventional means, such as spray drying, shelf drying, tunnel drying, rotary drying, drum drying, pneumatic drying, turbo shelf drying, disc drying or fluidised bed-drying.

If appropriate, the microspheres may at any stage be treated to reduce the amount of residual unreacted monomers, for example by any of the procedures described in the earlier mentioned WO 2004/072160 or US 4287308.

A further aspect of the invention concerns expanded microspheres obtained by expanding expandable microspheres as described above, for example to a particle diameter from 2 to 5 times larger than the diameter of the unexpanded microspheres. The density of the expanded microspheres may, for example, be from 0.005 to 0.06 g/cm³. The expansion is effected by heating the expandable microspheres to a temperature above Tₛₜₐᵣₜ. The upper temperature limit is set by when the microspheres start collapsing and depends on the exact composition of the polymer shell and the propellant. In most cases a temperature from 80°C to 150°C is suitable. The density of the expanded microspheres can be controlled by selecting temperature and time for the heating. The expansion can be effected by any suitable means for heating in any suitable device, as described in e.g. EP 0348372, WO 004/056549 or WO 2006/009643.

The expandable and expanded microspheres of the invention are useful in various application such as paper making, printing inks (such as waterborne inks, solvent borne inks, plastisols, UV-curing inks etc. e.g. for textile, wall paper etc.), putties, sealants, toy-clays, underbody coatings, adhesives, debonding of adhesives, artificial leather, genuine leather, paint, non-woven materials, paper and board, coatings (e.g anti-slip coating etc.) for various materials such as paper, board, plastics, metals and textile, explosives, cable insulations, thermoplastics (such as polyethylene, polyvinyl chloride, and ethylene-vinylacetate) or thermoplastic elastomers (such as styrene-ethylenebutylene-styrene co-polymer, styrene-butadiene-styrene co-polymer, thermoplastic polyurethanes and thermoplastic polyolefins), styrene-butadiene rubber, natural rubber, vulcanized rubber, silicone rubbers, thermosetting polymers (such as epoxies, polyurethanes and polyesters). In some of these applications expanded microspheres are particularly advantageous, such as in putties, sealants, toy-clays, genuine leather, paint, explosives, cable insulations and thermosetting polymers (like epoxies, polyurethanes and polyesters). In some cases it is also possible to use a mixture of expanded and expandable microspheres of the invention, for example in underbody coatings, silicone rubbers and light weight foams.

Still a further aspect of the invention concerns an aqueous slurry comprising expandable thermoplastic microspheres as described above, preferably in an amount from 5 to 55 wt%, most preferably from 20 to 55 wt%. Such a slurry is useful for various applications of the expandable microspheres, including e.g. paper making. The slurry preferably also comprises at least one thickener, preferably compatible with paper making. Examples of such thickeners include at least partially water soluble polymers selected from the group consisting of starch, gums, celluloses, chitins, chitosans, glycans, galactans, pectins, mannans, dextrins, co-polymers made from monomers comprising acrylic acid or salts thereof (preferably up to 50 mol%, most preferably up to 20 mol% acrylic acid or salt thereof), homo- and co-polymers made from monomers comprising esters or amides of acrylic acid, homo and co-polymers made from monomers comprising methacrylic acid, esters or amides thereof, rubber latexes, poly(vinyl chloride) and copolymers, poly(vinyl esters) and co-polymers (e.g. with ethylene), poly(vinyl alcohol), polyamines, polyetyleneimine, polyethylene/ polypropylene oxides, polyurethane, and aminoplast and phenoplast precondensates such as urea/ formaldehyde, urea/ melamine/ formaldehyde or phenol/ formaldehyde and polyamidoamine epichlorohydrin resins. Examples of suitable gums include guar gums, tamarind gums, locust bean gums, tare gums, karaya, okra, acacia, xanthan gums etc. and mixtures thereof, of which guar gums are particularly preferred. Examples of suitable celluloses include derivatives such as optionally chemically modified CMC (carboxymethyl cellulose) and cellulose ethers like EHEC (ethyl hydroxyethyl cellulose) and HEC (hydroxyethyl cellulose), and mixtures thereof. Chemically modified cellulose derivatives include, for example, those modified with various functional groups such as quaternary amines, other amines, sulphates, sulphonates, phosphates, phosphonates, polyethylene oxide and polypropylene oxide.

The at least partially water soluble polymer can be straight chained, branched or cross-linked. The average molecular weight can vary within wide limits, depending on the kind of polymer. In most cases the preferred average molecular weight is at least 500, more preferably at least 2000 and most preferably at least 5000. The upper limit is not critical and in most cases the average molecular weight is preferably up to 50 000 000, more preferably up to 10 000 000, most preferably up to 1 000 000.

Particularly preferred polymers include starch, CMC, EHEC, Guar gum, polyamidoamine epichlorohydrin resins, co-polymers of acrylic acid with other monomers (e.g. with acrylamide), and homo- or co-polymers of polyacrylamides, polyamine, poly(vinyl alcohol) and polyethylene/ polypropylene oxides.

One or more at least partially water soluble polymers effective as thickener are preferably present in an amount to stabilise the slurry against substantial sedimentation or flotation of the microspheres to an extent that they cannot be re-dispersed again. In many cases this can be achieved by adding sufficient polymer to obtain a preferred viscosity of the slurry from about 150 to about 1000 mPas at 25°C, most preferably from about 200 to about 600 mPas at 25°C (refers to measurement with an Anton Paar DV-1 P viscosimeter equipped with a spindle L3). The amount required to stabilise the slurry depends on the polymer and other circumstances such as the pH. In many cases a preferred content of at least partially water soluble polymer in the slurry is from about 0.1 to about 15 wt%, most preferably from about 0.1 to about 10 wt%, particularly most preferably from about 0.5 to about 10 wt%.

All thickeners and other additives disclosed in any of the earlier mentioned WO 2006/068573 and WO 2006/068574 may be used in the aqueous slurry of the invention in the preferred amounts also disclosed therein.

Particular aspects of the invention relates to the use of expandable microspheres as described above in printing inks, , artificial leather, nonwoven and in the production of paper, particularly from a stock containing cellulosic fibres. A further aspect relates to the use of expanded microspheres as described above in the production of paper.

When used in printing inks, in particular water borne printing inks, the expandable microspheres, preferably wet unexpanded microspheres, are added to standard formulations well known to those skilled in the art. Such formulations usually include one or more binders and one or more thickeners. Other components may include, for example, pigments, anti-foaming agents, fillers, chemicals for preventing skinning or clogging, etc. Printing inks may also be based on acrylate dispersions or plastisols comprising expandable microspheres. After printing, the microspheres are expanded by heating, before, during or after the drying of the ink. Such printing inks are particularly suitable for printing on textiles or wallpaper.

When used in artificial leather, the expandable microspheres, preferably dry unexpanded microspheres, are used in standard formulations in standard procedures known by those skilled in the art, for example in the surface layer of multilayer artificial leather, for example of suede type or any other kind of structure. The artificial leather can be produced by any standard process, such as Release paper process, Direct coating of woven or non-woven, or the Coagulation process, from any standard material such polyurethane (PU), polyvinyl chloride (PVC) and mixtures thereof. Usually, artificial leather produced by any of the above processes is coated with PU or PVC paste containing expandable microspheres and is then heated to expand the microspheres.

Production of nonwoven may comprise the steps of forming a web of fibres, adding to said web a binder and expandable microspheres as described above, and forming nonwoven and applying heat to raise the temperature of the microspheres sufficiently for them to expand and thereby increase the bulk nonwoven. The expandable microspheres and the binder may be added separately or as a mixture. The amount of expandable microspheres added is preferably from about 0.1 to about 30 wt% of dried product, most preferably from about 0.5 to about 15 wt% of dried product. The amount of binder added is preferably from about 10 to about 90 wt% of dried product, most preferably from about 20 to about 80 wt% of dried product. Further details can be found in the previously mentioned WO 2004/113613.

In production of paper the expandable microspheres are preferably used to increase the bulk of the paper, but may also serve other purposes. The microspheres are then preferably added to a stock containing cellulosic fibres, which then is dewatered and dried, wherein the microspheres expand and contribute to increasing the bulk of the paper.

A special aspect of the invention relates to a process for the production of paper comprising the steps of adding thermally expandable microspheres as described above to a stock containing cellulosic fibres, dewatering the stock on a wire to obtain paper, and drying the paper by applying heat and thereby also raising the temperature of the microspheres sufficiently for them to expand and increase the bulk of the paper.

The amount of expandable microspheres added to the stock is preferably from 0.1 to 20 wt%, most preferably from 0.2 to 10 wt% dry microspheres of the dry content in the stock. Any kind of paper machine known in the art can be used.

The term "paper", as used herein, is meant to include all types of cellulose-based products in sheet or web form, including, for example, board, cardboard and paper board. The invention has been found particularly advantageous for the production of board, cardboard and paper board, particularly with a basis weight from 50 to 1000 g/m², preferably from 150 to 800 g/m².

The paper may be produced as a single layer or a multi-layer paper. If the paper comprises three or more layers, the expandable microspheres may be added to the portions of the stock forming one or several of these layers, for example only to the portions of the stock not forming any of the two outer layers.

The stock preferably contains from 50 to 100 wt%, most preferably from 70 to 100 wt% of cellulosic fibres, based on dry material. Before dewatering, the stock besides expandable microspheres, may also contain one or more fillers, e.g. mineral fillers like kaolin, china clay, titanium dioxide, gypsum, talc, chalk, ground marble or precipitated calcium carbonate, and optionally other commonly used additives, such as retention aids, sizing agents, aluminium compounds, dyes, wet-strength resins, optical brightening agents, etc. Examples of aluminium compounds include alum, aluminates and polyaluminium compounds, e.g. polyaluminium chlorides and sulphates. Examples of retention aids include cationic polymers, anionic inorganic materials in combination with organic polymers, e.g. bentonite in combination with cationic polymers or silica-based sols in combination with cationic polymers or cationic and anionic polymers. Examples of sizing agents include cellulose reactive sizes such as alkyl ketene dimers and alkenyl succinic anhydride, and cellulose non-reactive sizes such as rosin, starch and other polymeric sizes like copolymers of styrene with vinyl monomers such as maleic anhydride, acrylic acid and its alkyl esters, acrylamide, etc.

At drying, the paper, and thereby also the microspheres, is preferably heated to a temperature from 50 to 150°C, most preferably from 60 to 110°C. This results in expansion of the microspheres and thereby also a bulk increase of the paper. The magnitude of this bulk increase depends on various factors, such as the origin of cellulosic fibres and other components in the stock, but is in most cases from 5 to 70 % or more per weight percentage of retained microspheres in the dried paper, compared to the same kind of paper produced without addition of expandable microspheres or any other expansion agent. Any conventional means of drying involving transferring heat to the paper can be applied, such as contact drying (e.g. by heated cylinders), forced convection drying (e.g. by hot air), infrared techniques, or combinations thereof. In the case of contact drying, the temperature of the contact surfaces, e.g. the cylinders, is preferably from 20 to 150°C, most preferably from 30 to 130°C. The paper may pass a series of several cylinders, e.g. up to 20 or more, of increasing temperature. The paper may then undergo any kind of conventional treatment such as surface sizing, coating, calendering and the like.

The cellulosic fibres in the stock may, for example, come from pulp made from any kind of plants, preferably wood, such as hardwood and softwood. The cellulosic fibres may also partly or fully originate from recycled paper, in which case the invention has been found to give unexpectedly good results.

The expandable microspheres can be added in any form, although it from a practical point of view is most preferred to add them in the form of an aqueous slurry as described above.

A further aspect of the invention concerns paper comprising expanded microspheres obtained from expandable microspheres as earlier described. The paper may further comprise cellulosic fibres and other conventional components. The microspheres may have been expanded in the process for the production of the paper as described above or been expanded separately and then added to the stock containing cellulosic fibres from which the paper is produced.

The invention will be further described in connection with the following Examples where examples 23, 39-43 are not according to the invention, which however, are not to be interpreted to limit the scope of the invention. If not otherwise stated, all parts and percentages refer to parts and percent by weight.

The expansion properties of the microspheres were evaluated on a Mettler TMA 40 with a TC15 TA processor and a PC with STAR^{e} software using a heating rate of 20°C / min and a load (net.) of 0.06 N. Tₛₜₐᵣₜ is the temperature at which the expansion starts, Tₘₐₓ is the temperature at which maximum expansion is obtained and TMA-density is the density of the microspheres at Tₘₐₓ.

The particle size and size distribution was determined by laser light scattering on a Malvern Mastersizer Hydro 2000 SM apparatus on wet samples. The mean particle size is presented as the volume median diameter d(0.5).

The amount of propellant was determined by thermal gravimetric analysis (TGA) on a Mettler Toledo TGA/SDTA851e. All samples were dried prior to analysis in order to exclude as much moisture as possible and if present also residual monomers. The analyses were performed under an atmosphere of nitrogen using a heating rate at 20°C min⁻¹ starting at 30°C.

Example 1: A reaction mixture containing Mg(OH)₂-stabilised organic droplets in water was created by mixing the phases and stirring vigorously until a suitable droplet size had been achieved. The water dispersion contained 2.2 parts of Mg(OH)₂ and 332 parts of water. The organic droplets contained 2 parts of dilauroylperoxide, 38 parts of isobutane, 52 parts of acrylonitrile, 28 parts of methacrylonitrile, 20 parts of ethyl vinyl ether and 0.3 parts of trimethylolpropane trimethacrylate. Polymerisation was performed at 62°C in a sealed reactor under agitation. After cooling to room temperature a sample of the obtained microsphere slurry was removed for determination of the particle size distribution. After filtration, washing and drying the particles were analysed by TMA. The dry particles contained about 23% by weight of isobutane and had a mean particle size of about 25 µm. The TMA-results are found in Table 1.

Examples 2-30: Microspheres were prepared in a plurality of polymerisation experiments performed as in Example 1 except for monomers and propellants, which were added according to Table 1. As crosslinking monomer 0.3-1 parts of trimethylolpropane trimethacrylate (Examples 2-10 and 17-30) or di(ethylene glycol) dimethacrylate (Examples 11-16) was used and as initiator 2.0-2.5 parts of dilauroylperoxide was used. In Examples 17 and 18 the propellants were 38 parts of n-butane and a mixture of propane and n-butane (14/86 w/w), respectively.The amounts of water and Mg(OH)₂ in the examples varied between 251-332 parts and 2.2-4.8 parts respectively. This is due to small differences in the recipes in different polymerisation reactors but does not influence the thermal properties of the polymerised particles. Polymerisation was performed at 61-62°C as described in Example 1. In Example 2, prior to handling the particles outside the reactor, the amount of residual monomers was reduced by treatment with 2.1 parts NaHSO₃ for 4 hrs at 73°C, after which the temperature was lowered to room temperature and the particles were isolated and analysed. In Examples 22 and 23 the product contained high amounts of unreacted monomers and the samples were difficult to analyze. The dry particles from Examples 30 contained a low amount of propellant, probably due to leakage during drying of the particles. Analytical results can be found in Table 1.

Examples 31-32: Microspheres were prepared as in Example 1 except for monomers and propellants, which were added according to Table 1, and stabilizing the organic droplets by using a water dispersion of silica instead of Mg(OH)₂. The water dispersion was prepared by mixing 252 parts of water, 11 parts of 1 M NaOH, 19 parts of 10% acetic acid, 0.3 parts of Cr(NO₃)₃, 10 parts of 40% colloidal silica, 0.6 parts of a condensation product of diethanolamine and adipic acid. After cooling to room temperature a sample of the obtained microsphere slurry was removed for determination of the particle size distribution. After filtration, washing and drying the particles were analysed by TMA. Analytical results can be found in Table 1.

**Table 1. Analytical results for Examples 1-32 and amounts of different chemicals used, expressed as parts per weight.**

| **Example** | **AN** | **EVE** | **MAN** | **X** | **IB** | **IP** | **Size (µm)** | **Propellant (wt%)** | **Tstart (°C)** | **Tₘₐₓ (°C)** | **TMA-density (g/l)** |
|---|---|---|---|---|---|---|---|---|---|---|---|
| 1 | 52 | 20 | 28 | - | 38 | - | 25 | 23 | 81 | 142 | 6.2 |
| 2 | 52 | 20 | 28 | - | 33 | - | 10 | 25 | 93 | 130 | 10.0 |
| 3 | 59 | 10 | 31 | - | 38 | - | 40 | 24 | 84 | 171 | 6.0 |
| 4 | 62 | 5 | 33 | - | 38 | - | 29 | 26 | 96 | 177 | 8.6 |
| 5 | 63 | 3 | 34 | - | 38 | - | 35 | 27 | 97 | 180 | 16.8 |
| 6 | 55 | 30 | 15 | - | 38 | - | 42 | 16 | 75 | 141 | 16.4 |
| 7 | 45 | 30 | 25 | - | 38 | - | 32 | 35 | 79 | 144 | 14.3 |
| 8 | 65 | - | 35 | - | 38 | - | 29 | 23 | 98 | 191 | 11.8 |
| 9 | 52 | 20 | 28 | - | - | 35 | 32 | 28 | 93 | 151 | 8.1 |
| 10 | 59 | 10 | 31 | - | - | 35 | 45 | 26 | 104 | 166 | 8.4 |
| 11 | 60 | - | 40 | - | - | 36 | 36 | 27 | 114 | 197 | 5.7 |
| 12 | 60 | 5 | 35 | - | - | 36 | 40 | 27 | 110 | 186 | 6.6 |
| 13 | 60 | 10 | 30 | - | - | 36 | 35 | 27 | 104 | 170 | 6.9 |
| 14 | 60 | 20 | 20 | - | - | 36 | 39 | 29 | 93 | 157 | 10.0 |
| 15 | 60 | 30 | 10 | - | - | 36 | 48 | 30 | 82 | 147 | 14.4 |
| 16 | 60 | 40 | - | - | - | 36 | 38 | 33 | 72 | 116 | 24.7 |
| 17 | 52 | 20 | 28 | - | - | - | 26 | 22 | 90 | 154 | 6.0 |
| 18 | 52 | 20 | 28 | - | - | - | 28 | 17 | 87 | 152 | 7.4 |
| 19 | 70 | 30 | - | - | 38 | - | 37 | 16 | 73 | 121 | 77.4 |
| 20 | 50 | 50 | - | - | 38 | - | 40 | 31 | 54 | 101 | 23.8 |
| 21 | 50 | 50 | - | - | - | 35 | 29 | 34 | 66 | 104 | 50.4 |
| 22 | 30 | 70 | - | - | - | 35 | N.d. | 23 | 60 | 82 | 109 |
| 23 | - | 100 | - | - | - | 35 | N.d. | N.d. | N.d. | N.d. | N.d. |
| 24, X = MMA | 20 | 10 | 35 | 35 | 30 | - | 23 | 27 | 94 | 122 | 18.8 |
| 25, X = MMA | 30 | 10 | 35 | 25 | 30 | - | 20 | 24 | 94 | 120 | 35.7 |
| 26, X = MMA | 30 | 20 | 30 | 20 | 30 | - | 13 | 16 | 82 | 121 | 16.3 |
| 27, X = MMA | 52 | 20 | - | 28 | - | 35 | 29 | 26 | 82 | 140 | 23.6 |
| 28, X = MA | 52 | 20 | - | 28 | - | 35 | 30 | 27 | 109 | 125 | 24.9 |
| 29, X = VDC | 52 | 20 | - | 28 | - | 35 | 30 | 28 | 90 | 117 | 39.2 |
| 30, X = IBMA | 52 | 20 | - | 28 | - | 35 | 26 | 3 | 93 | 110 | 470 |
| 31,X=VAc | 52 | 20 | - | 28 | - | 23 | 9.2 | 16 | 88 | 113 | 28.2 |
| 32 | 52 | 20 | 28 | - | - | 23 | 7.5 | 24 | 106 | 133 | 20.0 |

| | | | | | | | | | | | |
|---|---|---|---|---|---|---|---|---|---|---|---|
| AN = acrylonitrile, EVE = ethyl vinyl ether, MAN = methacrylonitrile, MA = methyl acrylate, MMA = methyl methacrylate, VDC = vinylidene chloride, IBMA = isobutyl methacrylate, VAc = vinyl acetate, IB = isobutane, IP = isopentane, N.d. = Not determined | | | | | | | | | | | |

Examples 33-38: Microspheres were prepared in a plurality of polymerisation experiments performed as in Example 1 except for monomers and propellants, which were added according to Table 2. The amounts of water in the examples varied between 320-332 parts. This is due to small differences in the recipes in different polymerisation reactors but does not influence the thermal properties of the polymerised particles. Analytical results can be found in Table 2.

**Table 2. Analytical results for Examples 33-38 and amounts of different chemicals used, expressed as parts per weight.**

| **Example** | **AN** | **BVE** | **MAN** | **IB** | **IP** | **Size (µm)** | **Propellant (wt%)** | **Tstart (°C)** | **Tₘₐₓ (°C)** | **TMA-density (g/l)** |
|---|---|---|---|---|---|---|---|---|---|---|
| 33 | 52 | 20 | 28 | - | 35 | 43 | 31 | 109 | 152 | 8.9 |
| 34 | 52 | 20 | 28 | 38 | - | 47 | 17 | 97 | 164 | 9.6 |
| 35 | 70 | 30 | - | - | 35 | 35 | 31 | 109 | 125 | 79.3 |
| 36 | 70 | 30 | - | 38 | - | 29 | 14 | 70 | 110 | 246 |
| 37 | 50 | 50 | - | - | 35 | 37 | 14 | 66 | 82 | 137 |
| 38 | 50 | 50 | - | 38 | - | 24 | 20 | 73 | 105 | 139 |

| | | | | | | | | | | |
|---|---|---|---|---|---|---|---|---|---|---|
| AN = acrylonitrile, BVE = butyl vinyl ether, MAN = methacrylonitrile, IB = isobutane, IP = isopentane, N.d. = Not determined | | | | | | | | | | |

Examples 39-43: Microspheres were prepared in a plurality of polymerisation experiments performed as in Example 1 except for monomers and propellants, which were added according to Table 3. In Examples 39-40 and 43, 1 part of the crosslinking monomer, di(ethylene glycol) dimethacrylate was used, while in Examples 41-42 no crosslinking monomer other than BDVE was used. As initiator 2.0-2.5 parts of dilauroylperoxide was used. The amounts of water and Mg(OH)₂ in the examples varied between 251-332 parts and 2.1-4.8 parts respectively. This is due to small differences in the recipes in different polymerisation reactors but does not influence the thermal properties of the polymerised particles. Polymerisation was performed at 61-62°C as described in Example 1. As can be seen in Table 3, when using 1,4-butanediol divinyl ether as monomer the particles show poor or no expansion compared to e.g. Example 4 and 12 in Table 1.

**Table 3. Analytical results for Examples 39-43 and amounts of different chemicals used, expressed as parts per weight.**

| **Example** | **AN** | **BDVE** | **MAN** | **IB** | **IP** | **Size (µm)** | **Propellant (wt%)** | **Tstart (°C)** | **Tₘₐₓ (°C)** | **TMA-density (g/l)** |
|---|---|---|---|---|---|---|---|---|---|---|
| 39 | 60 | 2 | 38 | - | 35 | 39 | 25 | 116 | 144 | 52,3 |
| 40 | 60 | 5 | 35 | - | 35 | 33 | 27 | 121 | 122 | 190 |
| 41 | 60 | 5 | 35 | - | 35 | 34 | 27 | 120 | 121 | 167 |
| 42 | 60 | 10 | 30 | - | 35 | 30 | 35 | 126 | 127 | 230 |
| 43 | 62 | 5 | 33 | 34 | - | 38 | 18 | - | - | No expansion |

| | | | | | | | | | | |
|---|---|---|---|---|---|---|---|---|---|---|
| AN = acrylonitrile, BDVE = 1,4-butanediol divinyl ether, MAN = methacrylonitrile, IB = isobutane, IP = isopentane | | | | | | | | | | |

Example 44. Microspheres from Example 2 was tested in printing ink by creating a homogenous dispersion by mixing 16.1 parts of wet microspheres (74.4% dry weight), 73.9 parts of vinyl acetate-ethylene copolymer dispersion binder (Mowilith DM-107 from Celanese, 60% dry weight), 66.3 parts of methyl methacrylate-ethyl acrylate copolymer emulsion binder (Primal ECO-16 from Rohm and Haas, 45.5% dry weight), 10.0 parts of glycerol, 0.8 parts of a mineral oil based defoamer (Nopco ENA-515 from Cognis) and 29.9 parts of water, using a Silverson mixer. Then 3.0 parts of an acrylic polymer dispersion thickening agent (Alcoprint PT-XN from Ciba) was added, followed by further mixing with a dissolver mixer until thickening was complete and a smooth mixture was obtained. This resulted in a print containing 12% by dry weight of microspheres. Screen prints were made which were dried over night at room temperature. Then the thickness of the unexpanded prints were measured with a coating thickness gauge (Elcometer 355 Standard) and was found to be 40 µm. The prints were expanded for 60 sec at 90 - 160°C in a Mathis labdryer hot air oven. The thickness of the expanded prints were measured and the expansion factors were calculated by dividing with the thickness of the unexpanded print. An expandable printing ink, created from commercially available microspheres having polymer shells of 58% vinylidene chloride, 33% acrylonitrile and 9% methyl methacrylate and having isobutane as propellant, was tested in the same way. The expansion factors are presented in Table 4.

**Table 4. Expansion factors for microspheres in printing ink**

| **Temperature** (**°C**) | **Example 2** | **Reference** |
|---|---|---|
| 90 | 1.0 | 1.0 |
| 100 | 1.3 | 1.3 |
| 110 | 3.0 | 2.5 |
| 120 | 4.3 | 3.3 |
| 130 | 5.3 | 3.8 |
| 140 | 6.0 | 3.8 |
| 150 | 3.8 | 3.5 |
| 160 | 2.8 | 3.3 |

The results show that the expansion factor of the ink from the chlorine-free microsphere of the invention are higher compared to the expansion factors from the chlorine containing microspheres, especially in the region between 110 - 150°C.

Example 45: A single layer paper board with a basis weight of about 300 g/m² was produced on a pilot paper machine with a machine speed of about 4 m/min and not having recirculated process water. The pulp was composed of 42.5 wt% hardwood, 42.5 wt% softwood pulp and 15.0% filler (GCC) and was beaten to a Schopper-Riegler value of 28°SR and then dispersed to give a pulp slurry/stock. An aqueous slurry of expandable microspheres was added to the stock before the mixing box in an amount of about 2.0 wt% dry microspheres of the dry substance in the stock. As retention aid Compozil^{®} (Eka Chemicals) was used and AKD was used as sizing agent. In the drying section the paper web was heated by cylinders having a temperature profile from 70 to 120°C. Expandable microspheres from Example 2 were tested. Commercially available microsphere slurries, with microspheres having a polymer shell of 73% vinylidene chloride, 24% acrylonitrile and 3% methyl methacrylate and having isobutane as propellant, were tested as Reference microspheres. Starch (Solvitose C5™ from Avebe Starches North Europe) was added as a thickening agent to the microsphere slurries to stabilise against flotation or sedimentation. In order to determine the retention of the microspheres, paper samples were taken before the press section for determination of the amount of microspheres. This was done by quantification of the amount of isobutane present in the paper by GC and from that the amount of microspheres was calculated. The retention was calculated from the microspheres addition and the content of microspheres in the paper. Moreover, samples from the dried paper were taken for determination of bulk and thickness. The results are shown in Table 5.

**Table 5 Bulk increase in paper**

| **Microsphere sample** | **Amount of propellant (wt%)** | **Particle size (µm)** | **Retention (%)** | **Increased bulk (% per percentage of retained microspheres)** |
|---|---|---|---|---|
| Example 2 | 25 | 10 | 65 | 30 |
| Reference | 13 | 12 | 80 | 25 |

The results show that the increase of the bulk of the paper from the chlorine-free microspheres of the invention is better compared to the increase of the bulk from the chlorine containing microspheres.

## Claims

1. Thermally expandable thermoplastic microspheres comprising a polymer shell made from ethylenically unsaturated monomers encapsulating a propellant, said ethylenically unsaturated monomers comprising from 20 to 80 wt% of acrylonitrile and from 1 to 70 wt% of vinyl ether having only one carbon-to-carbon double bond, the total amount of acrylonitrile and vinyl ether having only one carbon-to-carbon double bond being from 30 to 100 wt% of the ethylenically unsaturated monomers.

2. Microspheres as claimed in claim 1, wherein said ethylenically unsaturated monomers comprises from 40 to 80 wt% acrylonitrile:

3. Microspheres as claimed in any one of the claims 1-2, wherein said unsaturated monomers comprises from 5 to 50 wt% of vinyl ether having only one carbon-to-carbon double bond.

4. Microspheres as claimed in any one of the claims 1-3, wherein the total amount of acrylonitrile and vinyl ether having only one carbon-to-carbon double bond being from 50 to 100 wt% of the ethylenically unsaturated monomers.

5. Microspheres as claimed in any one of the claims 1-4, wherein said vinyl ether having only one carbon-to-carbon double bond is alkyl vinyl ether.

6. Microspheres as claimed in claim 5, wherein the alkyl group has from 1 to 10 carbon atoms.

7. Microspheres as claimed in claim 6, wherein the alkyl vinyl ether is selected from the group consisting of methyl vinyl ether, ethyl vinyl ether and mixtures thereof.

8. Microspheres as claimed in any one of the claims 1-7, wherein said ethylenically unsaturated monomers comprises methacrylonitrile.

9. Microspheres as claimed in any one of the claims 1-8, wherein said ethylenically unsaturated monomers comprise less than 10 wt% of halogen containing monomers.

10. Microspheres as claimed in any one of the claims 1-9, wherein said propellant comprises at least one of propane, n-butane, isobutane or isopentane.

11. Microspheres as claimed in any one of the claims 1-10, wherein Tₛₜₐᵣₜ is from 40 to 140°C.

12. Process for the production of thermally expandable microspheres according to any one of the claims 1-11 comprising polymerising ethylenically unsaturated monomers in the presence of a propellant to yield microspheres comprising a polymer shell encapsulating said propellant, said ethylenically unsaturated monomers comprising from 20 to 80 wt% of acrylonitrile and from 1 to 70 wt% of monomers selected from the group consisting of alkyl vinyl ethers having only one carbon-to-carbon double bond, the total amount of acrylonitrile and monomers selected from the group consisting of alkyl vinyl ethers having only one carbon-to-carbon double bond being from 30 to 100 wt% of the ethylenically unsaturated monomers.

13. Aqueous slurry comprising thermally expandable microspheres according to any one of the claims 1-11.

14. Aqueous slurry as claimed in claim 13 further comprising at least one thickener being an at least partially water soluble polymer selected from the group consisting of starch, gums, celluloses, chitins, chitosans, glycans, galactans, pectins, mannans, dextrins, co-polymers made from monomers comprising acrylic acid or salts thereof, homo- and co-polymers made from monomers comprising esters or amides of acrylic acid, homo and co-polymers made from monomers comprising methacrylic acid, esters or amides thereof, rubber latexes, poly(vinyl chloride) and copolymers, polyvinyl esters) and co-polymers, poly(vinyl alcohol), polyamines, polyetyleneimine, polyethylene/ polypropylene oxides, polyurethane, and aminoplast and phenoplast precondensates and polyamidoamine epichlorohydrin resins.

15. Expanded microspheres obtained by expanding expandable microspheres according to any one of the claims 1-11.

16. Use of thermally expandable microspheres according to any one of the claims 1-11 in the production of paper.

17. Use of thermally expandable microspheres according to any one of the claims 1-11 in printing inks.

18. Use of thermally expandable microspheres according to any one of the claims 1-11 in the production of artificial leather.

19. Use of thermally expandable microspheres according to any one of the claims 1-11 in the production of non-woven.

20. Use of expanded microspheres according to claim 15 in the production of paper.

21. Process for the production of paper comprising the steps of adding thermally expandable microspheres according to any one of the claims 1-11 to a stock containing cellulosic fibres, dewatering the stock on a wire to obtain paper, and drying the paper by applying heat and thereby also raising the temperature of the microspheres sufficiently for them to expand and increase the bulk of the paper.

22. Process as claimed in claim 21, wherein the thermally expandable microspheres are added in the form of an aqueous slurry according to any one of the claims 13-14.

23. Paper comprising expanded microspheres obtained from expandable microspheres according to any one of the claims 1-11.

## Patentansprüche

1. Thermisch expandierbare thermoplastische Mikrosphären umfassend eine Polymerhülle aus ethylenisch ungesättigten Monomeren, die ein Treibmittel verkapselt, wobei die ethylenisch ungesättigten Monomere von 20 bis 80 Gew.% Acrylnitril und von 1 bis 70 Gew.% Vinylether mit nur einer Kohlenstoff-Kohlenstoff-Doppelbindung umfassen, wobei die Gesamtmenge an Acrylnitril und Vinylether mit nur einer Kohlenstoff-Kohlenstoff-Doppelbindung von 30 bis 100 Gew.% der ethylenisch ungesättigten Monomere beträgt.

2. Mikrosphären nach Anspruch 1, wobei die ethylenisch ungesättigten Monomere von 40 bis 80 Gew.% Acrylnitril umfassen.

3. Mikrosphären nach einem der Ansprüche 1-2, wobei die ungesättigten Monomere von 5 bis 50 Gew.% Vinylether mit nur einer Kohlenstoff-Kohlenstoff-Doppelbindung umfassen.

4. Mikrosphären nach einem der Ansprüche 1-3, wobei die Gesamtmenge an Acrylnitril und Vinylether mit nur einer Kohlenstoff-Kohlenstoff-Doppelbindung von 50 bis 100 Gew.% der ethylenisch ungesättigten Monomere beträgt.

5. Mikrosphären nach einem der Ansprüche 1-4, wobei der Vinylether mit nur einer Kohlenstoff-Kohlenstoff-Doppelbindung Alkylvinylether ist.

6. Mikrosphären nach Anspruch 5, wobei die Alkylgruppe von 1 bis 10 Kohlenstoffatome hat.

7. Mikrosphären nach Anspruch 6, wobei der Alkylvinylether aus der Gruppe ausgewählt ist, bestehend aus Methylvinylether, Ethylvinylether und seinen Mischungen.

8. Mikrosphären nach einem der Ansprüche 1-7, wobei die ethylenisch ungesättigten Monomere Methacrylnitril umfassen.

9. Mikrosphären nach einem der Ansprüche 1-8, wobei die ethylenisch ungesättigten Monomere weniger als 10 Gew.% Halogen enthaltende Monomere umfassen.

10. Mikrosphären nach einem der Ansprüche 1-9, wobei das Treibmittel mindestens eines von Propan, n-Butan, Isobutan oder Isopentan umfasst.

11. Mikrosphären nach einem der Ansprüche 1-10, wobei Tₛₜₐᵣₜ von 40 bis 140°C ist.

12. Verfahren für die Herstellung von thermisch expandierbaren Mikrosphären nach einem der Ansprüche 1-11, umfassend das Polymerisieren ethylenisch ungesättigter Monomere in Gegenwart eines Treibmittels, um Mikrosphären zu ergeben, die eine Polymerhülle umfassen, welche das Treibmittel verkapselt, wobei die ethylenisch ungesättigten Monomere von 20 bis 80 Gew.% Acrylnitril und von 1 bis 70 Gew.% Monomere umfassen, ausgewählt aus der Gruppe, bestehend aus Alkylvinylethern mit nur einer Kohlenstoff-Kohlenstoff-Doppelbindung, wobei die Gesamtmenge an Acrylnitril und Monomeren, ausgewählt aus der Gruppe, bestehend aus Alkylvinylethern mit nur einer Kohlenstoff-Kohlenstoff-Doppelbindung, von 30 bis 100 Gew.% der ethylenisch ungesättigten Monomere beträgt.

13. Wässriger Brei, umfassend thermisch expandierbare Mikrosphären nach einem der Ansprüche 1-11.

14. Wässriger Brei nach Anspruch 13, weiterhin umfassend mindestens ein Verdickungsmittel, wobei es sich um ein mindestens teilweise wasserlösliches Polymer handelt, ausgewählt aus der Gruppe, bestehend aus Stärke, Gummen, Cellulosen, Chitinen, Chitosanen, Glycanen, Galactanen, Pektinen, Mannanen, Dextrinen, Copolymeren aus Monomeren, umfassend Acrylsäure oder ihre Salze, Homo- und Copolymere aus Monomeren, umfassend Ester oder Amide von Acrylsäure, Homo- und Copolymere aus Monomeren, umfassend Methacrylsäure, Ester oder Amide davon, Kautschuklatexe, Poly(vinylchlorid) und Copolymere, Poly(vinylester) und Copolymere, Poly(vinylalkohol), Polyamine, Polyethylenimin, Polyethylen/Propylenoxide, Polyurethan und Aminoplast-und Phenoplastvorkondensate und Polyamidamin-Epichlorhydrinharze.

15. Expandierte Mikrosphären, die man durch Expandieren expandierbarer Mikrosphären nach einem der Ansprüche 1-11 erhalten hat.

16. Verwendung thermisch expandierbarer Mikrosphären nach einem der Ansprüche 1-11 bei der Herstellung von Papier.

17. Verwendung thermisch expandierbarer Mikrosphären nach einem der Ansprüche 1-11 bei Druckfarben.

18. Verwendung thermisch expandierbarer Mikrosphären nach einem der Ansprüche 1-11 bei der Herstellung von Kunstleder.

19. Verwendung thermisch expandierbarer Mikrosphären nach einem der Ansprüche 1-11 bei der Herstellung von Vliesstoff.

20. Verwendung von expandierten Mikrosphären nach Anspruch 15 bei der Herstellung von Papier.

21. Verfahren für die Herstellung von Papier, umfassend die Schritte des Hinzufügens thermisch expandierbarer Mikrosphären nach einem der Ansprüche 1-11 zu Cellulosefasern enthaltendem Schlamm, Entwässern des Schlamms auf einem Papiermaschinensieb, um Papier zu erhalten, und Trocknen des Papiers durch Anwenden von Hitze und dadurch auch ausreichendes Erhöhen der Temperatur der Mikrosphären, damit sie expandieren und die Papiermasse erhöhen.

22. Verfahren nach Anspruch 21, wobei die thermisch expandierbaren Mikrosphären in Form eines wässrigen Breies nach einem der Ansprüche 13-14 hinzugefügt werden.

23. Papier umfassend expandierte Mikrosphären, die man aus expandierbaren Mikrosphären nach einem der Ansprüche 1-11 erhalten hat.

## Revendications

1. Microsphères thermoplastiques thermo-expansibles comprenant une enveloppe en polymère fabriquée à partir de monomères à insaturation éthylénique encapsulant un agent propulseur, lesdits monomères à insaturation éthylénique comprenant entre 20 et 80% en poids d'acrylonitrile et entre 1 et 70% en poids d'éther vinylique n'ayant qu'une seule double liaison carbone-carbone, la quantité totale d'acrylonitrile et d'éther vinylique n'ayant qu'une seule double liaison carbone-carbone étant comprise entre 30 et 100% en poids de monomères à insaturation éthylénique.

2. Microsphères telles que revendiquées dans la revendication 1, dans lesquelles lesdits monomères à insaturation éthylénique comprennent entre 40 et 80% en poids d'acrylonitrile.

3. Microsphères telles que revendiquées dans l'une quelconque des revendications 1 et 2, dans lesquelles lesdits monomères insaturés comprennent entre 5 et 50% en poids d'éther vinylique n'ayant qu'une seule double liaison carbone-carbone.

4. Microsphères telles que revendiquées dans l'une quelconque des revendications 1 à 3, dans lesquelles la quantité totale d'acrylonitrile et d'éther vinylique n'ayant qu'une seule double liaison carbone-carbone est comprise entre 50 et 100% en poids des monomères à insaturation éthylénique.

5. Microsphères telles que revendiquées dans l'une quelconque des revendications 1 à 4, dans lesquelles ledit éther vinylique n'ayant qu'une seule double liaison carbone-carbone est un éther alkylvinylique.

6. Microsphères telles que revendiquées dans la revendication 5, dans lesquelles le groupe alkyle a entre 1 et 10 atome(s) de carbone.

7. Microsphères telles que revendiquées dans la revendication 6, dans lesquelles l'éther alkylvinylique est choisi dans le groupe constitué d'éther méthylvinylique, d'éther éthylvinylique et de mélanges de ceux-ci.

8. Microsphères telles que revendiquées dans l'une quelconque des revendications 1 à 7, dans lesquelles lesdits monomères à insaturation éthylénique comprennent du méthacrylonitrile.

9. Microsphères telles que revendiquées dans l'une quelconque des revendications 1 à 8, dans lesquelles lesdits monomères à insaturation éthylénique comprennent moins de 10% en poids de monomères contenant des halogènes.

10. Microsphères telles que revendiquées dans l'une quelconque des revendications 1 à 9, dans lesquelles ledit agent propulseur comprend au moins l'un parmi le propane, le n-butane, l'isobutane et l'isopentane.

11. Microsphères telles que revendiquées dans l'une quelconque des revendications 1 à 10, dans lesquelles Tₛₜₐᵣₜ est comprise entre 40 et 140°C.

12. Procédé pour la production de microsphères thermo-expansibles selon l'une quelconque des revendications 1 à 11, comprenant la polymérisation de monomères à insaturation éthylénique en présence d'un agent propulseur pour aboutir à des microsphères comprenant une enveloppe en polymère encapsulant ledit agent propulseur, lesdits monomères à insaturation éthylénique comprenant entre 20 et 80% en poids d'acrylonitrile et entre 1 et 70% en poids de monomères choisis dans le groupe constitué d'éthers alkylvinyliques n'ayant qu'une seule double liaison carbone-carbone, la quantité totale d'acrylonitrile et de monomères choisis dans le groupe constitué d'éthers alkylvinyliques n'ayant qu'une seule double liaison carbone-carbone étant comprise entre 30 et 100% en poids des monomères à insaturation éthylénique.

13. Suspension aqueuse comprenant des microsphères thermo-expansibles selon l'une quelconque des revendications 1 à 11.

14. Suspension aqueuse telle que revendiquée dans la revendication 13, comprenant en outre au moins un agent épaississant qui est un polymère au moins partiellement hydrosoluble choisi dans le groupe constitué par l'amidon, les gommes, les celluloses, les chitines, les chitosanes, les glycanes, les galactanes, les pectines, les mannanes, les dextrines, les copolymères fabriqués à partir de monomères comprenant de l'acide acrylique ou des sels de celui-ci, les homopolymères et les copolymères fabriqués à partir de monomères comprenant des esters ou des amides de l'acide acrylique, les homopolymères et les copolymères fabriqués à partir de monomères comprenant de l'acide méthacrylique, les esters ou les amides de celui-ci, les latex de caoutchouc, le polychlorure vinylique et ses copolymères, les esters polyvinyliques et leurs copolymères, l'alcool polyvinylique, les polyamines, le polyéthylèneimine, les oxydes de polyéthylène/polypropylène, le polyuréthane, et les précondensats d'aminoplaste et de phénoplaste et les résines de polyamidoamine-épichlorhydrine.

15. Microsphères expansées obtenues par l'expansion de microsphères expansibles selon l'une quelconque des revendications 1 à 11.

16. Utilisation de microsphères thermo-expansibles selon l'une quelconque des revendications 1 à 11 dans la production de papier.

17. Utilisation de microsphères thermo-expansibles selon l'une quelconque des revendications 1 à 11 dans des encres d'imprimerie.

18. Utilisation de microsphères thermo-expansibles selon l'une quelconque des revendications 1 à 11 dans la production de cuir artificiel.

19. Utilisation de microsphères thermo-expansibles selon l'une quelconque des revendications 1 à 11 dans la production de non tissé.

20. Utilisation de microsphères expansées selon la revendication 15 dans la production de papier.

21. Procédé de production de papier comprenant les étapes consistant à ajouter des microsphères thermo-expansibles selon l'une quelconque des revendications 1 à 11 à une pâte contenant des fibres cellulosiques, à déshydrater la pâte sur une toile pour obtenir du papier, et à sécher le papier en appliquant de la chaleur et ainsi élever également la température des microsphères suffisamment pour leur expansion et pour augmenter le bouffant du papier.

22. Procédé tel que revendiqué dans la revendication 21, dans lequel les microsphères thermo-expansibles sont ajoutées sous la forme d'une suspension aqueuse selon l'une quelconque des revendications 13 et 14.

23. Papier comprenant des microsphères expansées obtenues à partir de microsphères expansibles selon l'une quelconque des revendications 1 à 11.
